# EUROPEAN PATENT SPECIFICATION

(11) **EP 4 179 594 B1**
(45) Date of publication and mention of the grant of the patent: **21.02.2024**
(21) Application number: 20739671.4
(22) Date of filing: 10.07.2020
(51) Int. Cl.: H01M 50/20, H01M 50/229, H01M 50/24, H01M 50/317

(54) **A BATTERY DEVICE COMPRISING A FLAME-RETARDANT ENCAPSULANT**
BATTERIEVORRICHTUNG MIT EINEM FLAMMHEMMENDEN VERKAPSELUNGSSTOFF
DISPOSITIF DE BATTERIE COMPRENANT UN AGENT D'ENCAPSULATION IGNIFUGE

(43) Date of publication of application: 17.05.2023
(73) Proprietor: Polarium Energy Solutions AB, 113 63 Stockholm (SE)
(72) Inventor: KULLBERG, Johan, 113 63 Stockholm (SE)
(74) Representative: AWA Sweden AB
(86) International application number: PCT/EP2020/069632
(87) International publication number: WO 2022/008084

(56) References cited:
- CN-A- 109 088 109
- CN-A- 109 546 258
- US-A1- 2011 045 324

## Description

### TECHNICAL FIELD

The present invention is related to a battery device comprising a flame-retardant encapsulant, for protecting equipment of the battery device.

### BACKGROUND

In recent years, the demand for battery devices has increased rapidly all over the world. Efficient batteries are needed in vehicles, in mobile devices and as backup solutions to support necessary functions in case of power failure or cut.

If a battery cell pack, located within the battery device, experiences a critical malfunction, it may go into thermal runaway. In this state combustion gases and flames may develop inside the battery cell pack, which may in turn affect other elements of the battery device. Combustion gases or flames resulting from the thermal runaway of a battery cell pack may lead to the entire battery cell pack or device catching fire or exploding. Further, there is an interest to protect equipment adjacent to the battery device. Hence, it may be of interest to provide a battery device which may protect elements of the battery device from a malfunctioning battery cell pack and/or reducing the risk of the fire propagating from the battery device to equipment adjacent to the battery device. CN 109 546 258 A discloses a battery devices comprising a flame-retardant encapsulant.

### SUMMARY

An object of the present invention is to provide a battery device which can insulate the battery cell pack from the battery device. It is a further object of the present invention to provide an encapsulation of combustion gases and flames upon a malfunction of the battery cell pack.

To achieve at least one of these objects and other objects, a battery device in accordance with the independent claim is provided. Preferred embodiments are defined by the dependent claims.

According to a first aspect, a battery device is provided. The battery device may comprise a casing, a battery cell pack located within the casing, and a flame-retardant encapsulant. The flame-retardant encapsulant may be located within the casing and placed around the battery cell pack to isolate the casing from the battery cell pack. The encapsulant may form an envelope. The envelope may comprise an outlet coupled to a ventilation space for ventilation of gases and/or heat generated upon a malfunction of the battery cell pack.

The battery cell pack may include a plurality of battery cells. The battery cell pack may also be referred to as cell pack or an assembly of battery cells. Further, by the term "casing", it is further meant, for example, housing, chassis, frame, enclosure or body.

The encapsulant may comprise a flame-retardant, such as a chemical and/or compound, which may increase the flame retardancy of the encapsulant. The flame retardant may be activated by the presence of an ignition source and is intended to prevent or slow down the further development of ignition.

Further, by the term "flame-retardant" it is further meant, for example, high-temperature resistant. The flame-retardant encapsulant may be able to withstand a temperature of at least 1500°C for at least 300 seconds.

A malfunction of the battery cell pack may be understood as, for example, a thermal runway of the battery cell pack or of at least one battery cell of the battery cell pack, and/or an ignition of, or by, at least one battery cell of the battery cell pack. A malfunction may increase the temperature and/or pressure inside the encapsulant. The increase in pressure inside the encapsulant may be caused by the propagation of heat and/or the presence of combustion smoke and gases.

The flame-retardant encapsulant may comprise a flame-retardant and/or high-temperature resistant fabric. The fabric may comprise a flame-retardant chemical and/or compound. In general, the encapsulant may also be referred to as a fabric encapsulation.

The casing may comprise a vent. The vent may be arranged through a side of the casing. The outlet may be coupled to the ventilation space via the vent.

By the term "vent", it is further meant, for example, duct, exit, outlet and/or opening.

Further, in the context of the present disclosure, the casing may comprise a top, a bottom and a number of sides. The number of sides may be any number, for example, one, three, four or more, depending on the geometry of the casing. However, the casing may in most cases have six sides (top, bottom, front, rear and two lateral sides). A side of the casing may therefore be a front side or a rear side of the casing.

The outlet may be hermetically coupled to the vent. The outlet may be substantially hermetically coupled to the vent.

By the term "hermitically coupled" is meant, for example, that combustion smoke and gases, and flames may not exit via the coupling. Further, the outlet may be coupled to the vent such that combustion smoke and gases, and flames may only exit the envelope via the vent.

The ventilation space may include a ventilation bag. The ventilation bag may be coupled to the outlet via the vent.

In some embodiments, the ventilation bag may be arranged outside of the casing. The ventilation bag may be hermetically coupled to the outlet and/or the vent.

Further, the outlet may be coupled to the ventilation bag such that combustion smoke and gases, and flames may only exit from the envelope into the ventilation bag. The ventilation bag may be configured to release air. Further, the ventilation bag may be configured to prevent combustion smoke and gases, and flames from exiting the ventilation bag. The ventilation bag may be coupled to the outlet through the vent.

The ventilation bag may be expandable. In a steady-state (or before any thermal runaway has occurred), the ventilation bag may be arranged in an unexpanded state. The ventilation bag may for example be arranged in an unexpanded state outside of the casing. The ventilation being in an unexpanded state may correspond to the ventilation bag being in a folded state and/or a compressed state.

The ventilation bag may be configured to expand upon the malfunction of the battery cell pack. The ventilation bag may be configured to expand from the unexpanded state to an expanded state upon the malfunction of the battery cell pack. The increase in pressure inside the encapsulant caused by the malfunction may cause the ventilation bag to expand. However, the heated air and/or combustion smoke and gases caused by the malfunction may exit the envelope via the vent, thereby expanding the ventilation bag. The pressure of the envelope and/or the ventilation bag may be kept substantially the same as the ventilation bag is expanding.

The ventilation bag may be arranged inside a compartment at a side of the casing. The compartment may be attached to a side of the casing. Further, the compartment may be pivotally attached to a side of the casing. Additionally, the compartment may be attached to the ventilation bag. The compartment may be arranged at the vent of the casing.

The compartment may be configured to open upon the malfunction of the battery cell pack. The compartment may be configured to open due to the pressure caused by the malfunction of the battery cell pack. Further, the compartment may be pushed and thereby opened by the ventilation bag as the ventilation bag is expanding.

The ventilation space may include an expandable ventilation bag. In some embodiments, the expandable ventilation bag may be coupled to the outlet and arranged inside the casing. The ventilation bag may be in an unexpanded state inside the casing before occurrence of a thermal runaway. The ventilation bag may be configured to expand upon the malfunction of the battery cell pack. Hence, the expandable ventilation bag may be configured to expand inside the casing. Additionally, the expandable ventilation bag may be arranged between the battery cell pack and a vent, or opening, of the casing. The ventilation bag may be configured to expand through the vent, or opening, of the casing, such that the ventilation bag is in an expanded state outside the casing.

A side of the casing may be configured to open upon expansion of the ventilation bag such that the ventilation bag can expand outside of the casing. A side of the casing may be pivotally attached to another side or the remaining of the casing. The side of the casing configured to be opened may be attached to another side by pivoting means (or a pivoting element). The side of the casing configured to open may be closed when the ventilation bag is in an unexpanded state.

The casing may comprise a locking member configured to keep the side of the casing configured to open, closed. The locking member may be configured to release the side of the casing configured to open upon pressure caused by the expansion of the ventilation bag. The locking member may be configured as, for example, a pin, a bump, a protrusion, or an indent. A side, bottom or top of the casing may comprise one or more indents or protrusions corresponding to the locking member, such that, when the side configured to open is in a closed position, the idents or protrusions of the side, bottom or top may lock together with the locking member. Hence, the ventilation bag may start to expand inside the casing. As the ventilation bag continues to expand, the pressure inside the casing may increase to a size large enough for disengaging the locking member, thereby opening the side configured to open.

The ventilation bag may comprise a flame-retardant and/or high-temperature resistant fabric. The ventilation bag may comprise a flame-retardant, such as a chemical and/or compound, which may increase the flame retardancy of the ventilation bag. The ventilation bag may be able to withstand a temperature of at least 1500°C for at least 300 seconds. The encapsulation and the ventilation bag may comprise the same material(s). Further, the encapsulation and the ventilation bag may be formed together. In other words, the encapsulation and the ventilation bag may be comprised by the same piece of fabric(s).

It is noted that other embodiments using all possible combinations of features recited in the above described embodiments may be envisaged. Thus, the present disclosure also relates to all possible combinations of features mentioned herein.

### BRIEF DESCRIPTION OF THE DRAWINGS

Exemplifying embodiments of the invention will be described below with reference to the accompanying drawings.
Fig. 1 is a schematic view of a battery device according to one or more exemplifying embodiments.
Fig. 2 is a schematic view of a cross section of a battery device according to one or more exemplifying embodiments.
Fig. 3 is a schematic view of a battery device according to one or more exemplifying embodiments.
Figs. 4-7 are schematic views of cross sections of a battery device according to one or more exemplifying embodiments.
Fig. 8 is a schematic view of a battery device according to one or more exemplifying embodiments.

All the figures are schematic, not necessarily to scale, and generally only show parts which are necessary in order to elucidate embodiments of the present invention, wherein other parts may be omitted or merely suggested. Like reference numerals refer to like elements throughout.

### DETAILED DESCRIPTION

The present invention will now be described hereinafter with reference to the accompanying drawings, in which exemplifying embodiments are shown. The present inventive concept may, however, be embodied in many different forms and should not be construed as limited to the embodiments set forth herein; rather, these embodiments are provided by way of example so that this disclosure will convey the scope of the invention to those skilled in the art. In the drawings, identical reference numerals denote the same or similar components having a same or similar function, unless specifically stated otherwise.

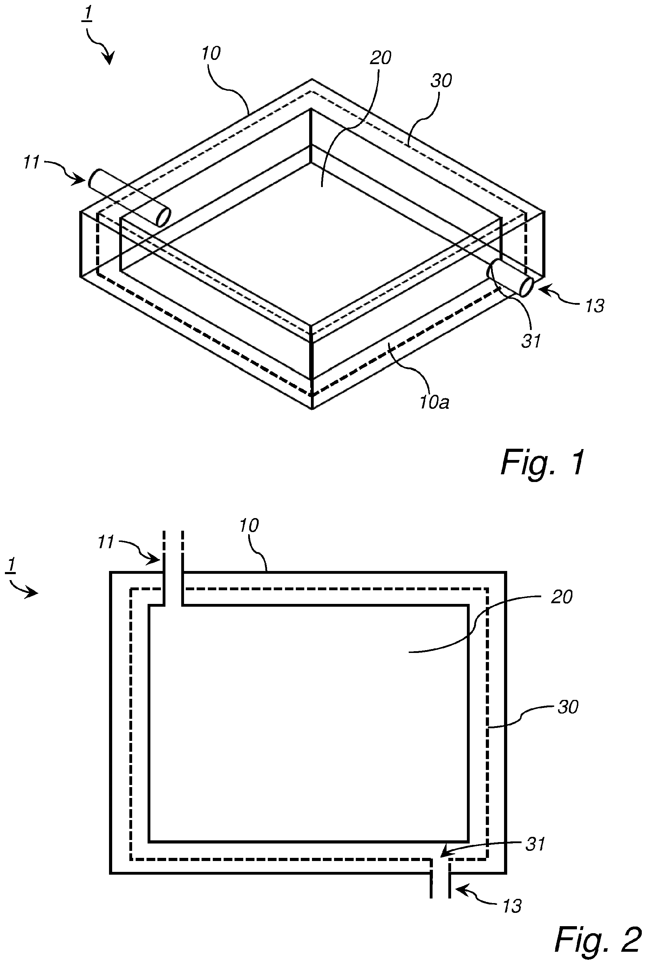

Fig. 1 is a schematic view of a battery device 1 according to one or more exemplifying embodiments.

The battery device 1 shown in Fig. 1 comprises a casing 10. The casing 10 depicted in Fig. 1 is a rectangular cuboid, where the width and the length are equal. The height of the cuboid shaped casing 10 is lesser than the width and the length of the casing 10. The present inventive concept is however not limited to a casing 10 comprising a shape as shown in Fig. 1. For example, the casing 10 may have any geometric three-dimensional (3D) shape.

The battery device 1 further comprises a battery cell pack 20. The battery cell pack 20 is located within the casing 10. For illustration purposes, the battery cell pack 20 depicted in Fig. 1 comprises essentially the same shape as the casing 10. However, the battery cell pack may have other shapes, depending on the number and/or arrangement of the battery cells of the battery cell pack.

The casing 10 comprises a vent 13 arranged through a back (or rear) side 10a of the casing. The vent 13 shown in Fig. 1 is formed by a hole in the side 10a of the casing 10 and a tube-shaped pipe is attached to the hole. It will be appreciated that the vent 13 may be arranged on any side, front, rear, top or bottom of the casing 10. Further, the vent 13 is not limited to being formed as a tube or pipe. For example, the vent 13 may be configured as a hole in a side, front, rear, top or bottom of the casing 10. Further, the pipe of the vent 13 may have a rectangular, circular, or triangular shape. Additionally, the vent 13 may only comprise a hole through a side of the casing 10.

The casing 10 may in some variants further comprise an inlet 11, arranged on another side (for example the back side) of the casing 10. The inlet 11 is configured as a channel arranged through a side of the casing 10. The battery device 1 shown in Fig. 1 may for example comprise cables or wires arranged through the inlet (or channel) 11 for electrically coupling the battery cell pack 20 to another device or system. By way of example, the battery device 1 may be used as a backup battery for a base station in a telecommunication system. The battery device 1 may therefore be electrically coupled to an electric power supply (mains power supply for instance) for charging the cells of the battery cell pack (charging mode of the battery device) and to devices of the base station for providing power (discharging mode of the battery device).

The present inventive concept is however not limited to a battery device comprising an inlet 11 such as depicted in Figure 1. The electrical connection to the battery cell pack may be provided by other means.

The battery device 1 further comprises a flame-retardant encapsulant 30. The encapsulant 30 is located within the casing 10 and placed around the battery cell pack 20 to isolate the casing 10 from the battery cell pack 20. The encapsulant 30 forms an envelope around the battery cell pack 20. The envelope comprises an outlet 31 coupled to a ventilation space for ventilation of gases and/or heat generated upon a malfunction of the battery cell pack 20.

Further, the battery cell pack 20 and the encapsulant 30 may be tightly arranged inside the casing 10. In general, the battery cell pack 20 and the encapsulant 30 may be designed to fit tightly the inside of the casing. In the embodiment depicted in Fig. 1, the battery cell pack 20 and the encapsulant 30 may be arranged inside the casing 10 such that they are tightly arranged in all directions, without the need of a space to the walls/sides of the casing 10.

In some embodiments, the encapsulant 30 may be in contact with both the casing 10 and the battery cell pack 20. Further, the battery cell pack 20 may be resting on a bottom of the casing 10 with the encapsulant 30 arranged therebetween. In other words, the battery cell pack may be arranged in the casing 10 without the need of any supporting structure and, thus, without requiring any openings in the encapsulant 30 to arrange the battery cell pack 20 inside the casing 10.

The outlet 31 of the encapsulant 30 shown in Fig. 1 is further coupled to the vent 13. The outlet 31 may be coupled to a hole of the vent 13, or through the hole into the pipe of the vent 13, or through the hole and the pipe of the vent 13.

A ventilation space may, for example, be a space at a distance from the battery device 1, or a space outside of the casing 10. For example, the vent 13 may be coupled via an auxiliary pipe to a ventilation space located further away from the battery device 1.

The coupling or electrical connections used for providing power supply to and from the battery cell pack of the battery device may be isolated, thereby isolating the casing 10 from the coupling or electrical connections. The encapsulant 30 may for example be formed around the coupling or electrical connections. Further, the encapsulant 30 may for example be formed or attached around the coupling or electrical connections at an opening of the inlet 11 on an inner surface of the casing 10 or at the battery cell pack 20.

The encapsulant 30 may for example be fitted around the coupling or electrical connections to prevent fire propagation. For example, the encapsulant 30 may be tightly fitted around the coupling or electrical connections. Additionally, the encapsulant 30 may be fitted around the coupling or electrical connection by tightening means or a tightening element. By the term "tightening means" or "tightening element", it is meant, for example, a hose clip, a hose clamp, a snap grip, an O clip, a cable ties, or a flame-retardant adhesive and/or sealant. Further, a plurality of tightening means or tightening elements may be used.

Fig. 2 is a schematic view of a cross-section of a battery device 1 according to one or more exemplifying embodiments.

The battery device described with reference to Fig. 2 may comprise features, elements and/or functions corresponding to the battery device described with reference to Fig. 1. Fig. 2 is provided for an increased understanding of a battery device 1 according to some embodiments. The same reference numerals in Figs. 1 and 2 denote the same or similar components, having the same or similar function.

The cross-section of the battery device 1 shown in Fig. 2 is along a horizontal plane, which is perpendicular to a longitudinal axis, of the battery device 1 and is viewed from a top-down view. The battery device 1 in Fig. 2 shows a casing 10, and a flame-retardant encapsulant 30 located within the casing and placed around a battery cell pack 20. In the embodiment shown in Fig. 2, there is a gap between the inner surface of the casing 10 and the encapsulant 30. Further, in the embodiment shown in Fig. 2, there is also a gap between the encapsulant 30 and the battery cell pack 20. However, the present inventive concept is not limited to the presence of a gap between the casing 10 and the encapsulant 30 and/or between the encapsulant 30 and the battery cell pack 20. For example, the encapsulant 30 may be arranged adjacent to either one of, or both of, the casing 10 and/or the battery cell pack 20.

The casing 10 comprises a vent 13 in the form of a pipe arranged through a side of the casing. The encapsulant 30 comprises an outlet 31 coupled through the vent 13 to a ventilation space.

In the embodiment shown in Fig. 2, the casing 10 further comprises an inlet 11 arranged on a side of the casing 10 opposite to the side of the casing 10 comprising the vent 13. The battery cell pack 20 may for example comprise electrically coupling means such as cables or wires arranged through the inlet 11. The inlet 11 may for example comprise isolation which may isolate the inlet 11 from gases and/or heat generated upon a malfunction of the battery cell pack 20. The encapsulant 30 is arranged around the coupling means, thereby forming an envelope around the battery cell pack 20.

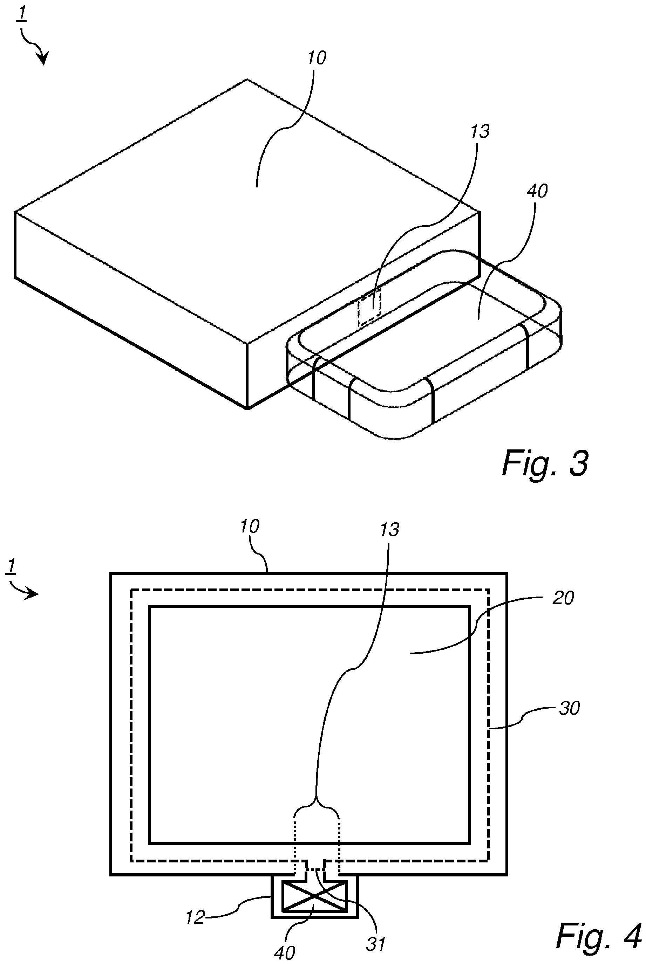

Fig. 3 is a schematic view of a battery device according to one or more exemplifying embodiments.

The embodiment illustrated in Fig. 3 may be equivalent to the embodiments described with reference to Figs. 1 and 2 except that the battery device further includes a ventilation bag 40 connected to the vent 13. Thus, it should be noted that the embodiment shown in Fig. 3 comprises features, elements and/or functions as those described above for the embodiments depicted in Figs. 1 and 2.

The ventilation bag 40 may have a rectangular cuboid shape, with rounded corners and edges. The ventilation bag 40 comprises an opening on a side of the ventilation bag 40 facing the front side of the casing 10. The opening of the ventilation bag 40 is coupled to the encapsulation (not shown in Fig. 3 but in Figs. 1 and 2) via the vent 13. The battery device 1 may thereby be configured to transfer gases and/or heat generated upon a malfunction of the battery cell pack 20 from the encapsulation 30 to the ventilation bag 40. Further, the ventilation bag 40 may be configured to ventilate air and to isolate gases and/or heat.

Another difference between the embodiment of the battery device 1 shown in Fig. 3 as compared to the embodiment of the battery device shown in Fig. 1 is that the vent 13 of the battery device 1 is arranged (centered) in the middle of the (rear) side of the casing 10. Further, the vent 13 as shown in Fig. 3 may be configured as a rectangular hole through the side of the casing 10.

Fig. 4 is a schematic view of a cross-section of a battery device 1 according to one or more exemplifying embodiments.

It should be noted that the embodiment illustrated in Fig. 4 comprises features, elements and/or functions similar or equivalent to those of the embodiments described with reference to Figs. 1 to 3. The battery device 1 illustrated in Fig. 4 comprises a casing 10, an encapsulant 30, a battery cell pack 20 and an expandable ventilation bag 40. The casing 10 shown in Fig. 4 comprises a vent 13, in the form of an opening, arranged at the middle of a (front) side of the casing 10. In other words, the vent 13 is provided as a hole through a side of the casing 10. The encapsulant 30 comprises an outlet 31 arranged at the vent 13.

The casing 10 further comprises a compartment 12. The compartment 12 is provided as a box with one opened side. In other words, the compartment 12 is configured as a container or a cavity within a side of the casing 10. The compartment 12 may be arranged with its opened side over the vent 13 and may be attached to (or be part of) the side of the casing 10. The ventilation bag 40 may then be arranged inside the compartment 12.

Before any malfunction of the battery cell pack, the ventilation bag 40 is in an unexpanded state inside the compartment 12. The outlet 31 is coupled to the ventilation bag 40 via the vent 13. In the present example, the ventilation bag 40 is configured to expand upon a malfunction of the battery cell pack 20. Further, the compartment 12 is configured to open upon a malfunction of the battery cell pack 20. The compartment 12 may for example be lightly attached to the side of the casing 10. By the term "lightly attached", it is meant, for example, attached such that the pressure caused by the malfunction of the battery cell pack 20 is sufficient to detach the compartment 12 from the side of the casing 10, hanging from for example pivoting means (or a pivoting element), or resting over the vent 13. For example, the compartment 12 may be pivotally attached along one edge of the opened side of the compartment 12 to the side of the casing 10. According to another example, the compartment 12 may be attached to the ventilation bag 40 such that the compartment 12 is removed from the side of the casing 10 when the ventilation bag 40 expands.

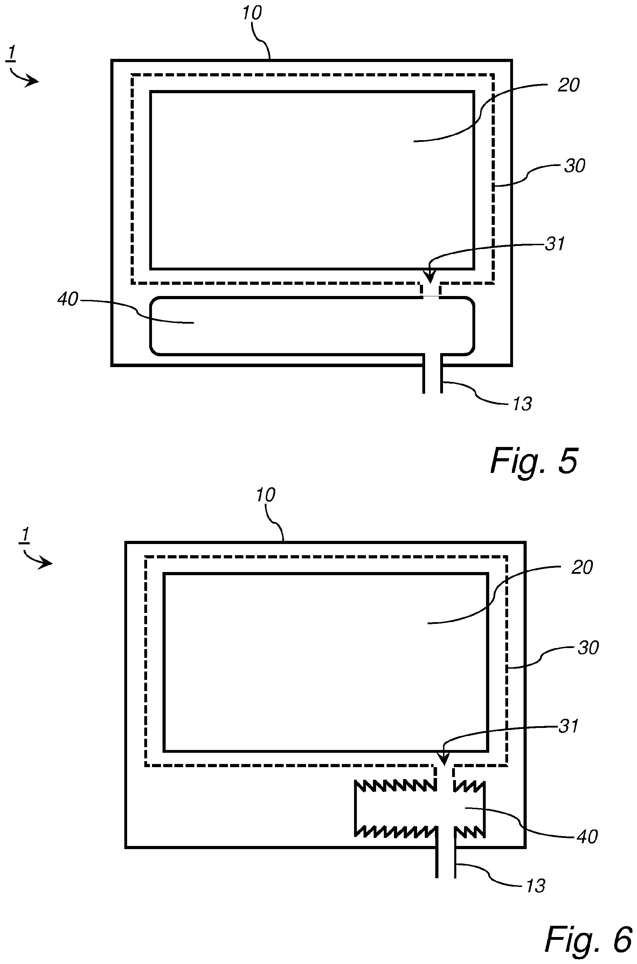

Fig. 5 is a schematic view of a cross-section of a battery device 1 according to one or more exemplifying embodiments.

The battery device shown in Fig. 5 comprises similar features, elements and/or functions as the battery devices of the embodiments described with reference to Figs. 1 to 4. The same reference numerals in Figs. 1 to 5 denote the same or similar components, having the same or similar function. A difference between the battery device 1 as shown in Fig. 5 and the battery device as shown in Fig. 2 is that the battery device 1 comprises a ventilation bag 40 arranged inside the casing 10. The ventilation bag 40 in Fig. 5 is arranged in a space located between the battery cell pack 20 and the side of the casing 10 comprising the vent 13, the ventilation bag 40 being depicted to be in an expanded state in Fig. 5. The space is defined or delimited by the rear side of the casing 10, the lateral sides of the casing 10 adjacent to the rear side of the casing and a side of the battery cell pack 20 facing the rear side of the casing 10. In other words, the casing 10 and the battery cell pack 20 are arranged such that there is a space left inside the casing 10, at which the ventilation bag 40 may be arranged. The encapsulation 30 is placed around the battery cell pack 20 and the outlet 31 is coupled to the ventilation bag 40. The ventilation bag 40 shown in Fig. 5 may comprise an outlet which may in turn be coupled to the vent 13 of the casing 10. However, in some other embodiments, the casing 10 may not comprise a vent 13 and the encapsulation 30 may simply be connected to the ventilation bag 40. Thus, according to some embodiments, the ventilation bag 40 may not comprise any outlet and/or may be arranged inside a casing 10 which may or may not comprise a vent 13.

In the present embodiment, except for the side at which the ventilation bag is arranged, the battery cell pack 20 and the encapsulant 30 may be tightly arranged with the other sides of the casing 10. Fig. 6 is a schematic view of a cross-section of a battery device 1 according to one or more exemplifying embodiments.

The battery device illustrated in Fig. 6 is equivalent to the battery device described with reference to Fig. 5 except that the ventilation bag 40 is in an unexpanded state. The ventilation bag 40 being in an unexpanded state may for example correspond to the ventilation bag 40 being in a folded state. The ventilation bag 40 may then expand to fill the space available in the casing 10 upon a malfunction in the battery cell pack 20such as a thermal runaway of one or more battery cells of the battery cell pack 20.

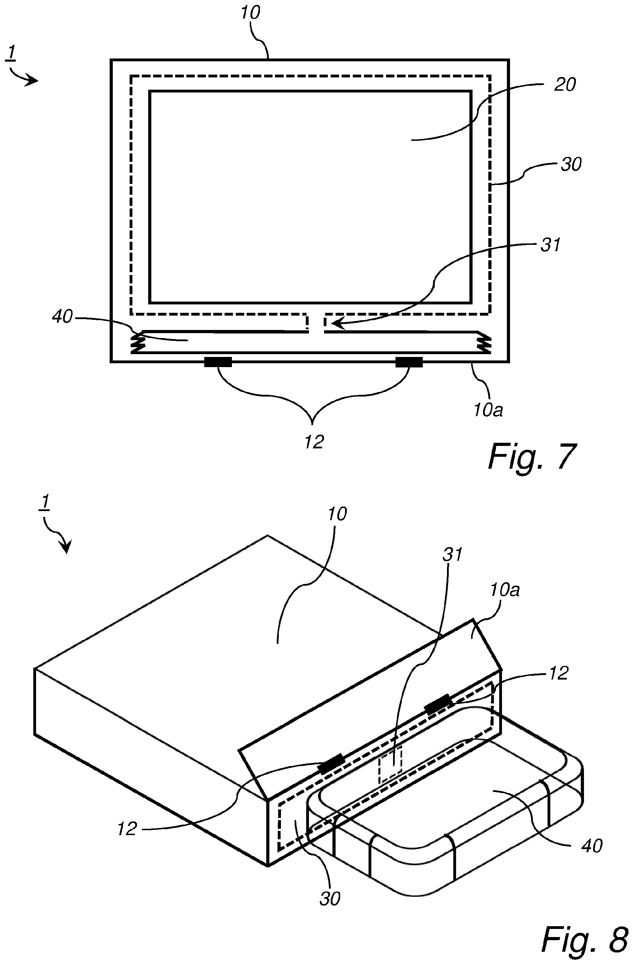

With reference to Figures 7 and 8, a battery device in accordance with some embodiments of the present disclosure is described.

Fig. 7 schematically illustrates a cross-sectional view of a battery device 1 according to one or more exemplifying embodiments. The battery device shown in Fig. 7 comprises features, elements and/or functions which are similar or equivalent to those of the battery devices according to the embodiments described with reference to Figs. 1 to 6. In the present embodiment, the ventilation bag 40 is arranged in a space located between the battery cell pack 20 and the side of the casing 10 comprising the vent 13. In other words, the casing 10 and the battery cell pack 20 are arranged such that there is a space left inside the casing 10, at which the ventilation bag 40 is arranged, in a similar manner as that shown in Figs. 5 or 6. However, in the present embodiment, the ventilation bag 40 is initially in an unexpanded state, i.e. before any malfunction of the battery cell pack has occurred. The embodiment described with reference to Fig. 7 differs therefore from the embodiment described with reference to Fig. 5 in that the space at which the ventilation bag 40 is arranged within the casing, i.e. the space defined by the (rear) side of the casing 10, the lateral sides of the casing 10 adjacent to the (rear) side of the casing and a side of the battery cell pack 20 facing the (rear) side of the casing 10 has a reduced size.

The space may have a reduced size (i.e. it does not need to be as large as that shown in Fig. 5) because a side, for example the rear side, of the casing at which the ventilation bag is arranged can be opened under the pressure of the ventilation bag when it becomes, or is, expanded. As the ventilation bag 40 initially is in an unexpanded state, less space is required for the ventilation bag within the casing.

In the present embodiment, the encapsulation 30 is placed around the battery cell pack 20 and the outlet 31 is coupled to the ventilation bag 40.

An example for providing a side of the casing that can be opened under the pressure of the ventilation bag being expanded (or under expansion) is illustrated in in Fig. 7 by two pivoting means 12. By the term "pivoting means", it is meant, for example, a hinge, a joint, an articulation, or an axis. The side 10a of the casing 10 is attached to the top of the casing 10 by the pivoting means 12. The pivoting means 12 may be arranged along the adjacent edges of the top of the casing 10 and the side 10a of the casing 10. Hence, the front side 10a may pivot and thereby open the casing 10. It will be appreciated that there may be any number of pivoting means 12, for example, there may be one, two, three, four or more. The side 10a may be configured to open upon a malfunction of the battery cell pack 20, under the increase pressure induced within the casing if the battery cell pack starts to burn. Further, the side 10a may be configured to be opened by pressure caused by the ventilation bag 40 becoming expanded as a result of smoke and gases entering the ventilation bag if the battery cell pack starts burning (i.e. with the ventilation bag going from an unexpanded state to an expanded state).

Fig. 8 shows the battery device of Fig. 7 in a perspective view, as seen from above. In the situation depicted in Fig. 8, the side 10a of the battery device is opened. In other words, Fig. 8 illustrates a situation in which the protection system providing by the encapsulant and the ventilation bag has been activated. The side 10a became opened by pivoting at the pivoting means 12 under the pressure of the ventilation bag. The ventilation bag 40 is therefore located outside of the casing 10 in an expanded state.

In this view, i.e. with the side 10a of the casing 10 being opened, the encapsulant 30, placed around the battery cell pack and arranged inside the casing 10 can be seen. The ventilation bag 40 is coupled to the outlet 31 of the encapsulant 30. The outlet 31 shown in Fig. 8 is square shaped. However, the outlet 31 may comprise any shape such as, for example, an elliptical shape or a polygon shape.

The expanded ventilation bag 40 has a width, a height and a length. The width, height and length of the expanded ventilation bag 40 shown in Fig. 8 are all of a smaller dimension than a respective width, a height and a length of the casing 10. However, at least one of a width, a height and/or a length of the expanded ventilation bag 40 may in other embodiments be greater than a corresponding width, height and/or length of the casing 10. The ventilation bag 40 may be folded or compressed while in an unexpanded state. The ventilation bag 40 may fit into the casing 10 in its unexpanded state. The ventilation bag 40 may expand such that at least one of a width, a height and/or a length of the expanded ventilation bag 40 may be greater than a corresponding width, height and/or length of the casing 10.

While the present invention has been illustrated in the appended drawings and the foregoing description, such illustration is to be considered illustrative or exemplifying and not restrictive; the present invention is not limited to the disclosed embodiments. Other variations to the disclosed embodiments can be understood and effected by those skilled in the art in practicing the claimed invention, from a study of the drawings, the disclosure, and the appended claims. In the appended claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A battery device (1) comprising:
a casing (10),
a battery cell pack (20) located within the casing, and
a flame-retardant fabric encapsulant (30) located within the casing and placed around the battery cell pack to isolate the casing from the battery cell pack,
wherein the fabric encapsulant forms an envelope comprising an outlet (31) coupled to a ventilation space for ventilation of gases and/or heat generated upon a malfunction of the battery cell pack.

2. A battery device according to claim 1, wherein the flame-retardant fabric encapsulant comprises a flame-retardant and/or high-temperature resistant fabric.

3. A battery device according to claim 1 or 2, wherein the casing comprises a vent (13) arranged through a side (10a) of the casing, wherein the outlet is coupled to the ventilation space via the vent.

4. A battery device according to claim 3, wherein the outlet is hermetically coupled to the vent.

5. A battery device according to claim 3 or 4, wherein the ventilation space includes a ventilation bag (40) coupled to the outlet via the vent and arranged outside of the casing.

6. A battery device according to claim 5, wherein the ventilation bag is expandable.

7. A battery device according to claim 5 or 6, wherein the ventilation bag is configured to expand upon said malfunction of the battery cell pack.

8. A battery device according to any of claims 5 to 7, wherein the ventilation bag is arranged inside a compartment (12) at a side of the casing.

9. A battery device according to claim 8, wherein the compartment is configured to open upon said malfunction of the battery cell pack.

10. A battery device according to claim 1 or 2, wherein the ventilation space includes an expandable ventilation bag (40) coupled to the outlet and arranged inside the casing.

11. A battery device according to claim 10, wherein the ventilation bag is in an unexpanded state inside the casing and configured to expand upon said malfunction of the battery cell pack.

12. A battery device according to claim 10 or 11, wherein a side (10a) of the casing is configured to open upon expansion of the ventilation bag such that the ventilation bag can expand outside of the casing.

13. A battery device according to any of claims 4-12, wherein the ventilation bag comprises a flame-retardant and/or high-temperature resistant fabric.

## Patentansprüche

1. Batterievorrichtung (1), umfassend:
ein Gehäuse (10),
ein Batteriezellenpaket (20), das in dem Gehäuse angeordnet ist, und
ein flammhemmendes Gewebe-Verkapselungsmaterial (30), das in dem Gehäuse angeordnet und um das Batteriezellenpaket platziert ist, um das Gehäuse von dem Batteriezellenpaket zu isolieren,
wobei das Gewebe-Verkapselungsmaterial eine Hülle bildet, die einen Auslass (31) umfasst, der an einen Entlüftungsraum zum Entlüften von bei einer Fehlfunktion des Batteriezellenpakets erzeugten Gasen und/oder Wärme gekoppelt ist.

2. Batterievorrichtung gemäß Anspruch 1, wobei das flammhemmende Gewebe-Verkapselungsmaterial ein flammhemmendes und/oder hochtemperaturbeständiges Gewebe umfasst.

3. Batterievorrichtung gemäß Anspruch 1 oder 2, wobei das Gehäuse eine Entlüftungsöffnung (13) umfasst, die durch eine Seite (10a) des Gehäuses angeordnet ist, wobei der Auslass über die Entlüftungsöffnung an den Entlüftungsraum gekoppelt ist.

4. Batterievorrichtung gemäß Anspruch 3, wobei der Auslass luftdicht an die Entlüftungsöffnung gekoppelt ist.

5. Batterievorrichtung gemäß Anspruch 3 oder 4, wobei der Entlüftungsraum einen Entlüftungsbeutel (40) enthält, der über die Entlüftungsöffnung an den Auslass gekoppelt und außerhalb des Gehäuses angeordnet ist.

6. Batterievorrichtung gemäß Anspruch 5, wobei der Entlüftungsbeutel expandierbar ist.

7. Batterievorrichtung gemäß Anspruch 5 oder 6, wobei der Entlüftungsbeutel dafür gestaltet ist, bei der Fehlfunktion des Batteriezellenpakets zu expandieren.

8. Batterievorrichtung gemäß einem der Ansprüche 5 bis 7, wobei der Entlüftungsbeutel in einer Kammer (12) an einer Seite des Gehäuses angeordnet ist.

9. Batterievorrichtung gemäß Anspruch 8, wobei die Kammer dafür gestaltet ist, sich bei der Fehlfunktion des Batteriezellenpakets zu öffnen.

10. Batterievorrichtung gemäß Anspruch 1 oder 2, wobei der Entlüftungsraum einen expandierbaren Entlüftungsbeutel (40) enthält, der an den Auslass gekoppelt und in dem Gehäuse angeordnet ist.

11. Batterievorrichtung gemäß Anspruch 10, wobei der Entlüftungsbeutel in in dem Gehäuse in einem nichtexpandierten Zustand vorliegt und dafür gestaltet ist, bei der Fehlfunktion des Batteriezellenpakets zu expandieren.

12. Batterievorrichtung gemäß Anspruch 10 oder 11, wobei eine Seite (10a) des Gehäuses dafür gestaltet ist, sich bei Expansion des Entlüftungsbeutels zu öffnen, so dass der Entlüftungsbeutel außerhalb des Gehäuses expandieren kann.

13. Batterievorrichtung gemäß einem der Ansprüche 4-12, wobei der Entlüftungsbeutel ein flammhemmendes und/oder hochtemperaturbeständiges Gewebe umfasst.

## Revendications

1. Dispositif de batterie (1), comprenant :
un boîtier (10),
un bloc de cellules de batterie (20) situé à l'intérieur du boîtier, et
un encapsulant en tissu ignifuge (30) situé à l'intérieur du boîtier et placé autour du bloc de cellules de batterie pour isoler le boîtier du bloc de cellules de batterie,
dans lequel l'encapsulant en tissu forme une enveloppe comprenant une sortie (31) couplée à un espace de ventilation pour la ventilation des gaz et/ou de la chaleur générés lors d'un dysfonctionnement du bloc de cellules de batterie.

2. Dispositif de batterie selon la revendication 1, dans lequel l'encapsulant en tissu ignifuge comprend un tissu ignifuge et/ou résistant aux hautes températures.

3. Dispositif de batterie selon la revendication 1 ou 2, dans lequel le boîtier comprend un évent (13) disposé à travers un côté (10a) du boîtier, dans lequel la sortie est couplée à l'espace de ventilation par le biais de l'évent.

4. Dispositif de batterie selon la revendication 3, dans lequel la sortie est couplée hermétiquement à l'évent.

5. Dispositif de batterie selon la revendication 3 ou 4, dans lequel l'espace de ventilation comporte un sac de ventilation (40) couplé à la sortie par le biais de l'évent et disposé à l'extérieur du boîtier.

6. Dispositif de batterie selon la revendication 5, dans lequel le sac de ventilation est gonflable.

7. Dispositif de batterie selon la revendication 5 ou 6, dans lequel le sac de ventilation est configuré pour se gonfler lors dudit dysfonctionnement du bloc de cellules de batterie.

8. Dispositif de batterie selon l'une quelconque des revendications 5 à 7, dans lequel le sac de ventilation est disposé à l'intérieur d'un compartiment (12) sur un côté du boîtier.

9. Dispositif de batterie selon la revendication 8, dans lequel le compartiment est configuré pour s'ouvrir lors dudit dysfonctionnement du bloc de cellules de batterie.

10. Dispositif de batterie selon la revendication 1 ou 2, dans lequel l'espace de ventilation comporte un sac de ventilation gonflable (40) couplé à la sortie et disposé à l'intérieur du boîtier.

11. Dispositif de batterie selon la revendication 10, dans lequel le sac de ventilation est dans un état dégonflé à l'intérieur du boîtier et configuré pour se gonfler lors dudit dysfonctionnement du bloc de cellules de batterie.

12. Dispositif de batterie selon la revendication 10 ou 11, dans lequel un côté (10a) du boîtier est configuré pour s'ouvrir lors du gonflement du sac de ventilation de telle sorte que le sac de ventilation peut se gonfler à l'extérieur du boîtier.

13. Dispositif de batterie selon l'une quelconque des revendications 4 à 12, dans lequel le sac de ventilation comprend un tissu ignifuge et/ou résistant aux hautes températures.
